# FASCICULE DE BREVET EUROPEEN

(11) **EP 3 186 594 B1**
(45) Date de publication et mention de la délivrance du brevet: **11.07.2018**
(21) Numéro de dépôt: 15760225.1
(22) Date de dépôt: 24.08.2015
(51) Int. Cl.: G01D 5/14

(54) **CAPTEUR DE POSITION LINÉAIRE À EFFET HALL POUR VÉHICULE AUTOMOBILE**
LINEARER POSITIONSSENSOR FÜR HALL-EFFEKT FÜR EIN KRAFTFAHRZEUG
HALL EFFECT LINEAR POSITION SENSOR FOR MOTOR VEHICLE

(30) Priorité: 25.08.2014 FR 1457967
(43) Date de publication de la demande: 05.07.2017
(73) Titulaire: Valeo Systèmes De Contrôle Moteur, 95800 Cergy Saint Christophe (FR)
(72) Inventeur: GUIBET, Vincent, F-14125 Mondeville (FR); BOUCHER, Thierry, F-14125 Mondeville (FR); ROSSI, Diego, F-14125 Mondeville (FR)
(74) Mandataire: Garcia, Christine
(86) Numéro de dépôt international: PCT/FR2015/052257
(87) Numéro de publication internationale: WO 2016/030624

(56) Documents cités:
- EP-A2- 1 452 827
- DE-A1- 4 341 810
- DE-A1- 19 738 316
- US-A1- 2013 293 223

## Description

La présente invention concerne un capteur de position linéaire à effet Hall pour véhicule automobile, et un actionneur pour véhicule automobile, comprenant un tel capteur de position linéaire. L'invention vise en particulier un dispositif de commande d'embrayage ou « cylindre émetteur d'embrayage » pour véhicule automobile comprenant un tel capteur de position linéaire à effet Hall.

De manière connue, un cylindre émetteur d'embrayage permet de commander hydrauliquement le débrayage et l'embrayage dans un véhicule automobile à boîte de vitesses manuelles. Plus précisément, un tel cylindre émetteur d'embrayage est classiquement mis en oeuvre en entrée d'un circuit hydraulique de commande de l'embrayage, tel que décrit par exemple dans la demande FR-A-2 862 114 au nom de VALEO EMBRAYAGES. Le cylindre émetteur est relié mécaniquement à la pédale d'embrayage, sur laquelle agit le conducteur du véhicule automobile, par une tige. La tige est solidaire d'un piston se déplaçant en translation dans un corps creux du cylindre émetteur d'embrayage, y délimitant une chambre hydraulique de volume variable. Le piston est prévu pour expulser un fluide ou liquide de commande contenu dans la chambre hydraulique en direction de la sortie du circuit hydraulique de commande formée par un cylindre récepteur sensiblement identique au cylindre émetteur.

Ainsi, la position du piston dans la chambre hydraulique du cylindre émetteur d'embrayage permet de déterminer l'état embrayé ou débrayé de l'embrayage. Cette information peut notamment être utilisée par le régulateur de vitesse du véhicule automobile, le système de coupure et de démarrage automatique du moteur à combustion interne à l'arrêt du véhicule (connu sous son nom anglais de « stop and start ») ou encore par un frein de parking électrique.

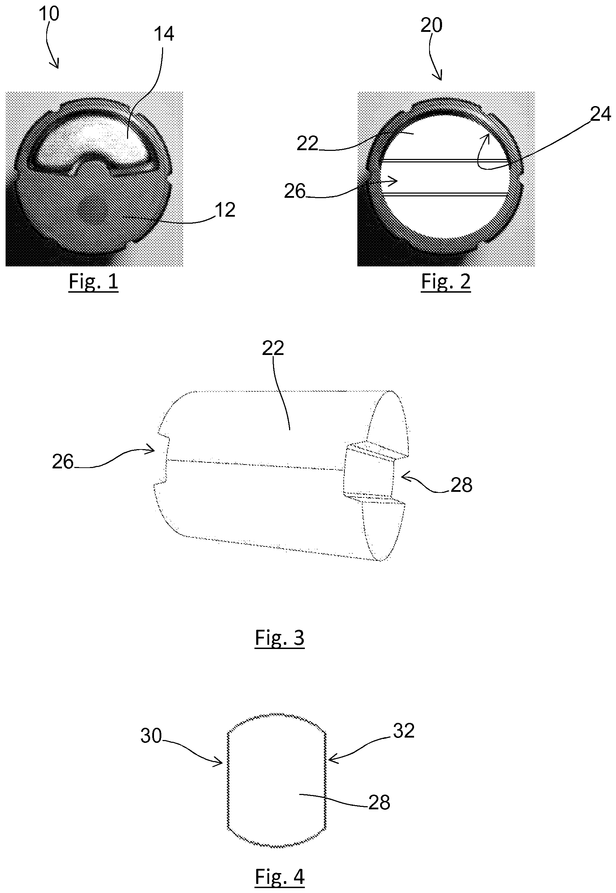

Pour connaitre la position du piston dans le cylindre émetteur d'embrayage, il est connu de munir le piston 10 d'un aimant 12, comme illustré à la figure 1, notamment en surmoulant le piston 10 sur l'aimant 12. Le corps creux inclut alors un circuit intégré de détection de champ magnétique, formant ainsi un capteur de position linéaire à effet Hall avec l'aimant 12 dans le piston 10.

L'aimant 12 présente ici une forme cylindrique de section en forme de portion d'anneau, alors que le piston 10 est cylindrique de section circulaire. L'aimant présente une aimantation axiale, c'est-à-dire que les lignes de champ sont sensiblement parallèles à la direction principale d'extension du piston et de l'aimant 12, perpendiculaire au plan de la figure 1, qui correspond également à la direction de déplacement du piston 10.

L'aimant 12 est en terre rare, en particulier à base de Néodyme, de Dysprosium ou de Samarium. Ces matières procurent de très bonnes performances magnétiques, en particulier de rémanence, qui permettent de réaliser un capteur à effet Hall performant. Cependant, le coût de ces matériaux à base de terre rare est très élevé. DE19738316 montre un autre exemple d'un capteur de position linéaire à effet Hall pour déterminer la position d'un piston. Le but de l'invention est de proposer un capteur de position linéaire à effet Hall perfectionné. L'invention est définie par les caractéristiques de la revendication 1. À cette fin, l'invention propose un capteur de position linéaire à effet Hall pour véhicule automobile, notamment pour actionneur pour véhicule automobile, en particulier pour cylindre émetteur d'embrayage pour véhicule automobile, comprenant un piston mobile en translation par rapport à une partie fixe du capteur de position, l'un parmi le piston et la partie fixe comprenant un aimant à aimantation diamétrale reçu dans un logement, et l'autre parmi le piston et la partie fixe comprenant un circuit de détection de champ magnétique, l'aimant et le logement étant conformés pour permettre l'insertion de l'aimant dans le logement uniquement dans des positions angulaires de l'aimant dans lesquelles, lorsque l'aimant est axialement au niveau du circuit de détection, la direction de l'aimant au circuit de détection est sensiblement parallèle à la direction des lignes de champs dans l'aimant.

Ainsi, l'invention propose de mettre en oeuvre un aimant à aimantation diamétrale. En outre, l'aimant et le logement sont conformés pour ne permettre l'insertion de l'aimant dans le logement, uniquement dans des positions angulaires de l'aimant permettant d'aligner l'aimant et le circuit de détection selon une direction sensiblement parallèle aux lignes de champs dans l'aimant. Ceci permet d'optimiser l'intensité du champ magnétique capté par le circuit de détection et donc de réduire la sensibilité aux bruits du capteur.

De manière préférée, le capteur selon l'invention présente une ou plusieurs des caractéristiques suivantes, prises seules ou en combinaison :
- l'aimant a une forme cylindrique, de préférence avec un ou de deux méplats, de préférence encore deux méplats symétriques.
- l'aimant est en en forme de barre de préférence de section convexe.
- l'aimant comprend, sur une extrémité latérale, l'une parmi une rainure et une nervure, de forme complémentaire à l'autre parmi une rainure et une nervure, réalisée au fond du logement.
- l'aimant comprend sur chacune de ses extrémités latérales, une rainure ou une nervure, de forme complémentaire à l'autre parmi une rainure et une nervure, réalisée au fond du logement.
- la/les rainure/s et/ou la/les nervures sont de section trapézoïdale.
- la ou les rainure/s sur l'aimant sont orientées dans une direction perpendiculaire à la direction d'aimantation de l'aimant.
- le piston comprend l'aimant et le logement recevant l'aimant.
- l'aimant est en ferrite ou en matériau à base de terre rare.
- l'aimant est recouvert d'une couche de revêtement, notamment d'une couche de peinture.

L'invention concerne également un actionneur pour véhicule automobile, en particulier cylindre émetteur d'embrayage, comprenant un mécanisme de commande en translation d'une partie mobile de l'actionneur par rapport à un châssis de l'actionneur et un capteur selon l'invention dont le piston est solidaire ou confondu avec la partie mobile de l'actionneur et la partie fixe est solidaire ou confondue avec le châssis de l'actionneur.
La figure 1 est une vue de face d'un premier exemple d'un piston d'un cylindre émetteur d'embrayage d'un véhicule automobile.
La figure 2 est une vue de face d'un second exemple d'un piston d'un cylindre émetteur d'embrayage d'un véhicule automobile.
La figure 3 montre, en perspective, l'aimant reçu dans le piston de la figure 2.
La figure 4 illustre schématiquement en coupe un autre exemple d'aimant pouvant être reçu dans un piston d'un cylindre émetteur d'embrayage d'un véhicule automobile.

On entend ici par actionneur, tout dispositif, tel un vérin par exemple, qui permet de réguler le débit ou la pression d'un fluide afin de piloter un autre système dans des conditions particulières. Un cylindre émetteur d'embrayage est un exemple d'un tel actionneur qui permet de commander, en cas d'actionnement de la pédale d'embrayage par le conducteur du véhicule automobile, une variation de pression de fluide dans un cylindre récepteur d'embrayage pilotant l'embrayage du véhicule automobile.

Un capteur de position linéaire s'entend ici d'un capteur permettant de capter une variation relative de position d'un élément dit mobile par rapport à un autre élément de référence dit fixe, selon une direction rectiligne. Notamment, un tel capteur permet de capter une translation relative de l'élément mobile par rapport à l'élément fixe.

Un capteur à effet Hall s'entend ici d'un capteur reposant sur le principe physique du magnétisme et comprenant notamment une source de champ magnétique et un détecteur de champ magnétique, le champ magnétique émis par la source et détectée par le détecteur variant, ici, en fonction d'une position axiale relative entre la source et le récepteur.

Par ailleurs, on entend ici par direction d'aimantation d'un aimant la direction principale ou moyenne des lignes de champ magnétique dans l'aimant.

Enfin, on entend ici par direction axiale la direction du mouvement de translation du piton qui correspond de manière préférée à la direction principale d'extension du piston. Notamment, quand le piston est cylindrique, la direction axiale correspond à la direction de l'axe principal du piston.

L'invention se rapporte à un capteur de position linéaire à effet Hall pour véhicule automobile, notamment pour actionneur pour véhicule automobile, en particulier pour cylindre émetteur d'embrayage de véhicule automobile. Le capteur de position linéaire à effet Hall comprend un piston mobile en translation selon un axe par rapport à une partie fixe du capteur de position.

Le piston mobile 20, tel qu'il est représenté sur la figure 2, comprend un aimant 22 reçu dans un logement 24 de section complémentaire.

La partie fixe du capteur comprend un circuit de détection de champ magnétique, permettant de détecter le champ magnétique émis par l'aimant 22 dans le piston 20. Le champ magnétique détecté par ce circuit de détection varie en fonction de la position du piston 20 par rapport à la partie fixe du capteur.

L'aimant 22 présente ici une forme de cylindre. L'aimant 22 est à aimantation diamétrale, c'est-à-dire que les lignes de champ magnétique dans l'aimant s'étendent selon un diamètre de la section transversale de l'aimant.

L'aimant 22 est ici en ferrite anisotrope, ce qui en réduit le coût par rapport à un aimant en terre rare. En variante cependant, l'aimant est en terre rare.

L'aimant 22 est réalisé de préférence par compression par voie sèche ou voie humide, la compression par voie sèche étant préférée du fait de son coût réduit.

Tel qu'illustrés à la figure 2, l'aimant 22 et le logement24 sont de sections circulaires. Cependant, l'aimant 22 présente des rainures 26, 28 sur ses extrémités latérales. Le logement 24 présente une nervure complémentaire sur son fond, permettant de positionner l'aimant 22 dans le logement 24 selon deux positions angulaires distinctes seulement, ces deux positions angulaires étant symétriques.

Dans ces positions angulaires, lorsque l'aimant 20 est axialement au niveau du circuit de détection dans le capteur, la direction depuis l'aimant 20 vers le circuit de détection est parallèle à la direction des lignes de champs dans l'aimant 25. L'aimantation diamétrale de l'aimant, conjuguée au positionnement angulaire adéquat de l'aimant dans le logement et donc relativement au circuit de détection dans le capteur, relativement aux lignes de champ magnétique dans l'aimant, donne un niveau d'induction plus élevé au niveau du circuit de détection qu'une aimantation axiale. Le capteur présente ainsi une sensibilité aux bruits plus faible. La course de lecture du capteur s'en trouve élargie. Le signal de sortie du capteur est également plus linéaire.

Bien entendu, l'aimant 22 peut ne présenter de rainure que sur une extrémité latérale. La présence d'une rainure sur chacune de ces deux surfaces latérales permet un positionnement indifférent dans les deux sens d'insertion de l'aimant 22 dans le logement 24.

Les rainures 26, 28 et la nervure dans le logement sont ici à section trapézoïdale. Ceci permet d'insérer facilement la nervure dans la rainure et de bloquer ensuite la rotation relative de l'aimant par rapport au logement. Bien entendu, d'autres formes des rainures et de la nervure sont envisageables.

Les rainures 26, 28 peuvent être réalisées par usinage, notamment quand l'aimant est en terre rare, après la compression de l'aimant.

Cependant, les rainures 26, 28 dans l'aimant 22 sont de préférence réalisées au moyen de l'outil de compression mis en oeuvre pour former l'aimant 22. Ainsi, la formation des rainures 26, 28 ne nécessite pas d'opération d'usinage. Ceci limite le nombre d'étapes de procédé pour obtenir l'aimant 22.

Les rainures 26, 28 sont de préférence orientées selon une direction perpendiculaire à la direction des lignes de champ dans l'aimant, ceci afin de conserver un maximum de matière au plus près du circuit de détection.

L'aimant 22 peut être recouvert d'un revêtement pour éviter que des particules ou des éclats ne se détachent de l'aimant, notamment dans le cas où les rainures sont réalisées par usinage. Une couche de peinture peut notamment recouvrir l'aimant.

La figure 4 présente un autre exemple d'aimant 22. L'aimant 22 de la figure 4 présente une forme cylindrique à section oblongue. Plus précisément, l'aimant 22 présente une forme de cylindre à section circulaire avec deux méplats 30, 32 symétriques. Les méplats sont de préférence parallèles à la direction d'aimantation dans l'aimant. Le logement présente alors une section complémentaire pour recevoir l'aimant 22 selon deux positions angulaires. Les méplats 30, 32 peuvent être réalisés par rectification.

Un capteur de position linéaire à effet Hall tel que décrit peut notamment être mis en oeuvre dans un actionneur pour véhicule automobile, en particulier dans un cylindre émetteur d'embrayage. L'actionneur peut alors comprendre un mécanisme de commande en translation d'une partie mobile de l'actionneur par rapport à un châssis de l'actionneur et un capteur tel que décrit ci-avant. Le piston est alors solidaire ou confondu avec la partie mobile de l'actionneur et la partie fixe est solidaire ou confondue avec le châssis de l'actionneur. Le mécanisme de commande en translation peut être de toute nature.

Un tel actionneur pour véhicule automobile peut notamment être un système bille-manivelle, une vanne EGR ou vanne de recirculation des gaz d'échappement, un capteur de pédale de frein. Dans le cas d'un cylindre émetteur d'embrayage, le piston du capteur est confondu avec le piston du cylindre émetteur d'embrayage. Le piston est destiné à être relié mécaniquement à la pédale d'embrayage d'un véhicule automobile. Le piston est déplacé dans un corps creux du cylindre émetteur d'embrayage, formant une chambre de fluide de commande délimitée par le piston. Le corps creux reçoit le circuit détecteur de champ magnétique. Ainsi, l'action du conducteur sur la pédale d'embrayage commande une translation du piston qui peut être mesurée au moyen du capteur. La translation du piston induit un refoulement de fluide de commande hors de la chambre, vers un circuit hydraulique de commande de l'embrayage.

L'invention ne se limite pas aux seuls modes de réalisation décrits en ci-avant mais est susceptibles de nombreuses variantes.

Notamment, l'aimant peut présenter une forme cylindrique, de toute section.

L'aimant peut également présenter une forme de barre, de toute section, une section convexe étant cependant préférée pour optimiser la quantité de matière magnétisable de l'aimant pour un encombrement donné de l'aimant.

En lieu et place des rainures, l'aimant peut comprendre des nervures, le logement présentant alors une rainure de forme complémentaire à ces nervures.

Enfin, en variante, le piston peut comprendre le circuit de détection et la partie fixe le piston.

## Revendications

1. Capteur de position linéaire à effet Hall pour véhicule automobile, notamment pour actionneur pour véhicule automobile, en particulier pour cylindre émetteur d'embrayage pour véhicule automobile, comprenant un piston (20) mobile en translation par rapport à une partie fixe du capteur de position, l'un parmi le piston (20) et la partie fixe comprenant un aimant (22) à aimantation diamétrale reçu dans un logement (24), et l'autre parmi le piston (20) et la partie fixe comprenant un circuit de détection de champ magnétique, l'aimant (22) et le logement (24) étant conformés pour permettre l'insertion de l'aimant (22) dans le logement (24) uniquement dans des positions angulaires de l'aimant dans lesquelles, lorsque l'aimant (22) est disposé axialement au niveau du circuit de détection, la direction de l'aimant (22) au circuit de détection est sensiblement parallèle à la direction des lignes de champs dans l'aimant (22),, l'aimant (22) comprenant, sur une extrémité latérale, l'une parmi une rainure (26 ; 28) et une nervure, de forme complémentaire à l'autre parmi une rainure et une nervure, réalisée au fond du logement (24).

2. Capteur selon la revendication 1, dans lequel l'aimant (22) a une forme cylindrique, de préférence avec un ou de deux méplats (30 ; 32), de préférence encore deux méplats symétriques (30 ; 32).

3. Capteur selon la revendication 1, dans lequel l'aimant (22) est en en forme de barre de préférence de section convexe.

4. Capteur selon les revendications 1 à 3, dans lequel la/les rainure/s (26 ; 28) et/ou la/les nervures sont de section trapézoïdale.

5. Capteur selon l'une des revendications 1 à 4, dans lequel la ou les rainure/s (26 ; 28) sur l'aimant sont orientées dans une direction perpendiculaire à la direction d'aimantation de l'aimant (22).

6. Capteur selon l'une quelconque des revendications précédentes, dans lequel le piston (20) comprend l'aimant (22) et le logement (24) recevant l'aimant (22).

7. Capteur selon l'une quelconque des revendications précédentes, dans lequel l'aimant (22) est en ferrite ou en matériau à base de terre rare.

8. Capteur selon l'une quelconque des revendications précédentes, dans lequel l'aimant (22) est recouvert d'une couche de revêtement, notamment d'une couche de peinture.

9. Actionneur pour véhicule automobile, en particulier cylindre émetteur d'embrayage, comprenant un mécanisme de commande en translation d'une partie mobile de l'actionneur par rapport à un châssis de l'actionneur et un capteur selon l'une quelconque des revendications précédentes dont le piston (20) est solidaire ou confondu avec la partie mobile de l'actionneur et la partie fixe est solidaire ou confondue avec le châssis de l'actionneur.

## Patentansprüche

1. Linearer Hall-Effekt-Positionssensor für Kraftfahrzeug, insbesondere für Aktuator für Kraftfahrzeug, insbesondere für Kupplungsgeberzylinder für Kraftfahrzeug, der einen Kolben (20) umfasst, der in Verschiebung in Bezug auf einen stationären Teil des Positionssensors beweglich ist, wobei einer des Kolbens (20) und des stationären Teils einen Magnet (22) mit diametraler Magnetisierung umfasst, der in einer Aufnahme (24) aufgenommen ist, und der andere des Kolbens (20) und des stationären Teils eine Magnetfeld-Erfassungsschaltung umfasst, wobei der Magnet (22) und die Aufnahme (24) ausgestaltet sind, um das Einsetzen des Magnets (22) in die Aufnahme (24) nur in Winkelpositionen des Magnets zu erlauben, in welchen, wenn der Magnet (22) axial im Bereich der Erfassungsschaltung angeordnet wird, die Richtung des Magnets (22) zu der Erfassungsschaltung im Wesentlichen zu der Richtung der Feldlinien in dem Magnet (22) parallel ist, wobei der Magnet (22) auf einem seitlichen Ende eine einer Nut (26; 28) und einer Rippe mit komplementärer Form zu der einen der Nut und der Rippe, die in dem Grund der Aufnahme (24) hergestellt ist, umfasst.

2. Sensor nach Anspruch 1, wobei der Magnet (22) eine zylindrische Form hat, bevorzugt mit einem oder zwei Flachteilen (30; 32), bevorzugt auch mit zwei symmetrischen Flachteilen (30; 32).

3. Sensor nach Anspruch 1, wobei der Magnet (22) eine Stangenform, bevorzugt mit konvexem Schnitt, hat.

4. Sensor nach den Ansprüchen 1 bis 3, wobei die Nut(en) (26; 28) und/oder die Rippe(n) einen trapezförmigen Schnitt haben.

5. Sensor nach einem der Ansprüche 1 bis 4, wobei die Nut(en) (26; 28) auf dem Magnet in eine Richtung senkrecht zu der Magnetisierungsrichtung des Magnets (22) ausgerichtet sind.

6. Sensor nach einem der vorhergehenden Ansprüche, wobei der Kolben (20) den Magnet (22) und die Aufnahme (24), die den Magnet (22) aufnimmt, umfasst.

7. Sensor nach einem der vorhergehenden Ansprüche, wobei der Magnet (22) aus Ferrit oder aus einem Material auf Seltene-Erde-Basis besteht.

8. Sensor nach einem der vorhergehenden Ansprüche, wobei der Magnet (22) mit einer Beschichtungslage, insbesondere einer Anstrichschicht, überzogen ist.

9. Aktuator für Kraftfahrzeug, insbesondere für Kupplungsgeberzylinder, der einen Steuermechanismus in Verschiebung eines beweglichen Teils des Aktuators in Bezug auf ein Gestell des Aktuators und einen Sensor nach einem der vorhergehenden Ansprüche umfasst, dessen Kolben (20) mit dem beweglichen Teil des Aktuators fest verbunden ist oder zusammenfällt, und dessen stationärer Teil mit dem Gestell des Aktuators fest verbunden ist oder zusammenfällt.

## Claims

1. Hall-effect linear position sensor for a motor vehicle, in particular for an actuator for a motor vehicle, in particular for a clutch master cylinder for a motor vehicle, comprising a piston (20) which can move translationally with respect to a fixed part of the position sensor, one among the piston (20) and the fixed part comprising a magnet (22) with diametral magnetization received in a housing (24), and the other among the piston (20) and the fixed part comprising a magnetic field detection circuit, the magnet (22) and the housing (24) being configured to allow the insertion of the magnet (22) into the housing (24) only in angular positions of the magnet in which, when the magnet (22) is arranged axially at the level of the detection circuit, the direction of the magnet (22) to the detection circuit is substantially parallel to the direction of the field lines in the magnet (22), the magnet (22) comprising, on a lateral end, one among a groove (26; 28) and a rib, of complementary shape to the other among a groove and rib produced at the bottom of the housing (24).

2. Sensor according to Claim 1, in which the magnet (22) has a cylindrical shape, preferably with one or with two flats (30; 32), preferably still two symmetrical flats (30; 32).

3. Sensor according to Claim 1, in which the magnet (22) is in the form of a bar preferably with a convex cross section.

4. Sensor according to Claims 1 to 3, in which the groove/grooves (26; 28) and/or the rib/ribs are of trapezoidal cross section.

5. Sensor according to one of Claims 1 to 4, in which the groove/grooves (26; 28) on the magnet is/are oriented in a direction perpendicular to the magnetization direction of the magnet (22).

6. Sensor according to any one of the preceding claims, in which the piston (20) comprises the magnet (22) and the housing (24) receiving the magnet (22).

7. Sensor according to any one of the preceding claims, in which the magnet (22) is made of ferrite or of a rare-earth-based material.

8. Sensor according to any one of the preceding claims, in which the magnet (22) is covered with a coating layer, in particular a paint layer.

9. Actuator for a motor vehicle, in particular a clutch master cylinder, comprising a mechanism for translationally controlling a movable part of the actuator with respect to a frame of the actuator and a sensor according to any one of the preceding claims, the piston (20) of which is secured or coincident with the movable part of the actuator and the fixed part is secured or coincident with the frame of the actuator.
